# EUROPÄISCHE PATENTANMELDUNG

(11) **EP 2 485 169 A1**
(43) Veröffentlichungstag der Anmeldung: **08.08.2012**
(21) Anmeldenummer: 11153144.8
(22) Anmeldetag: 03.02.2011
(51) Int. Cl.: G06F 17/50

(54) **Verfahren zur parameterfreien Formoptimierung von Bauteilen**

(71) Anmelder: Universität Innsbruck, 6020 Innsbruck (AT)
(72) Erfinder: Di Gerhard Lener Dr., 6800 Feldkirch (AT)
(74) Vertreter: Vossius & Partner

(57) **Zusammenfassung**

Verfahren mit den Schritten Erstellen eines 2- oder 3-dimensionalen digitalen Modells eines mechanischen Bauteils mit einem CAD-System; Durchführen einer Vorverarbeitung der digitalen Modelldaten mit einem Finite-Elemente-System; Durchführen einer statischen Strukturanalyse auf der Grundlage des vorverarbeiteten digitalen Modells zum Ermitteln der auf jedes Element der Modellstruktur wirkenden Beanspruchung; Durchführen einer transienten Temperaturfeldberechnung auf der Grundlage der ermittelten Beanspruchung des Modells; Aufbringen eines Temperaturlastfalls auf die modifizierte Modellstruktur und Durchführen einer Verformungsberechnung; wodurch eine modifizierte Modellgeometrie erhalten wird und Ausgeben der erhaltenen Modellgeometrie.

## Beschreibung

Die Erfindung betrifft Verfahren zur parameterfreien Formoptimierung von Bauteile. Insbesondere betrifft die Erfindung ein computergestütztes zur parameterfreien Formoptimierung von Bauteilen.

Bei der Entwicklung neuer Produkte steht heutzutage ein geringer Zeit- und Kostenaufwand im Vordergrund. In herkömmlichen Entwicklungsprozessen wird das Produkt in einem iterativen Prozess (trial and error) erstellt. In jeder Entwicklungsstufe findet eine Berechnung der Struktur hinsichtlich der Beanspruchung statt. Aus dieser Berechnung erhält man Spannungen oder auch Lebensdauergräßen. Diese Ergebnisse bilden nun wiederum die Grundlage für eine Variation der Struktur in der nächsten Entwicklungsstufe. Dieses Verfahren wird so lange wiederholt, bis ein annehmbares Ergebnis vorliegt. Ein Ziel kann die Minimierung der Beanspruchung, die Maximierung der Lebensdauer, die Eigenfrequenzmaximierung oder die Minimierung des Volumens sein. Bei solchen Verfahren wird üblicherweise die Methode der finiten Elemente (FEM) eingesetzt.

Ziel jedes Entwicklungsverfahrens ist eine Optimierung. Unter einem Optimum wird das beste erreichbare Resultat im Sinne eines Kompromisses zwischen verschiedenen Parametern oder Eigenschaften unter dem Aspekt einer Anwendung, einer Nutzung oder eines Zieles verstanden.

Besondere Aufmerksamkeit wird regelmäßig auf die Maximierung der Lebensdauer gelegt. Während bei anderen Zielen die mit der FEM berechneten Spannungen im Vordergrund stehen, ist es in diesem Fall die Robustheit. Durch die Optimierung derselben erreicht man viel größere Sicherheiten und eine Minimierung des Risikos der Ausfallwahrscheinlichkeit. Durch herkömmliche Methoden ist eine Reduzierung der Versagenswahrscheinlichkeit von komplexen Strukturen, wenn überhaupt, nur unter sehr großem Aufwand möglich. Durch die FEM ist man in der Lage, die Struktur nicht nur auf das plötzliche Versagen wegen zu großer Belastung, sondern auch auf Sicherheit zu optimieren.

Allgemein unterscheidet man bei einer Optimierung zwischen Gestalt- und Topologieoptimierung. Während die Gestaitoptimierung sich darauf beschränkt, die vorgegebene Oberfläche der zu optimierenden Struktur zu verändern, wird bei einer Topologieoptimierung ein Raum festgelegt, innerhalb welchem sich jede beliebige Form, unter Berücksichtigung vorgegebener Randbedingungen, herausbilden darf. Es kann aber auch nach Material und Materialverteilung (isotrop, anisotrop) optimiert werden.

Ein bekanntes Verfahren ist das der Parameteroptimierung (siehe beispielsweise Sauter, Mulfinger: Integration der numerischen Simulation a und Optimierung in die virtuelle Produktenstehung; XXV FEM-Kongress in Baden-Baden (1998)). Bei der Parameteroptimierung wird ein vollständig parametrisiertes Modell in das FE-Programm eingelesen. Dazu kann entweder das in der FE-Software integrierte Zeichenmodul verwendet werden (z. B. Abaqus oder ANSYS Workbench DesignModeler), bzw. wird das Modell mit einem anderen CAD-Programm (z.B. Pro/ENGINEER) erstellt und dann über eine (Direkt-) Schnittstelle in das FE-Programm eingelesen. Besondere Aufmerksamkeit bei der Modellerstellung ist den Randbedingungen zu widmen. Es darf nicht passieren, dass die Struktur überbestimmt (sich gegenseitig ausschließende Parameter) ist. Nach der Modellerstellurzg müssen Zielfunktionen, Designvariablen und Restriktionen definiert werden. Die Zielfunktion ist eine Funktion, die unter den vorgegebenen Restriktionen ein Minimum/Maximum ergeben soll. Dies kann z.B. das Strulcturvolumen oder die Lebensdauer sein. Designvariablen sind jene Werte der Zielfunktion, welche durch den Rechenvorgang automatisch verändert werden dürfen. Diese Variationen müssen aber in vorgegebenen Grenzen stattfinden. Restriktionen sind jene Kriterien, welche in der Berechnung nicht überschritten werden dürfen (z.B. die Hypothese nach von Mises). Das bedeutet, dass die Designvariablen so lange verändert werden, bis in keinem Punkt die Restriktionen (Vergleichsspannung) überschritten werden, wobei die Zielfunktion aber ein Minimum sein muss (z.B. minimales Volumen). Der Rechner führt nun verschiedene Variationen der Designvariablen durch und jeweils eine entsprechende Analyse. Die Dauer dieser Berechnung steigt mit der Anzahl der Designvariablen stark an. Bei entsprechend großer Anzahl der Designvariablen kann es auch passieren, dass die Lösung nicht konvergiert. Die Lösung hängt sehr stark davon ab, welche Werte als Designvariablen definiert werden. Zudem muss berücksichtigt werden, dass mit einer parameterorientierten Optimierung keine neuen Formen gefunden werden, da ausschließlich die vorgegebenen Punktionen variiert werden.

Ein weiteres bekanntes Verfahren ist das der parameterfreien Optimierung (siehe beispielsweise Sauter, Mulfinger, Müller: Neue Entwicklungen im Bereich der Gestalt- und Topologieoptimierung; FE-Design, Karlsruhe [1992]). Im Gegensatz zur parameterorientierten Optimierung benötigt man bei der parameterfreien Optimierung kein vollständig parametrisiertes Modell. Die Erstellung des Modells kann direkt mit der FE-Software erfolgen, es ist aber auch möglich, die Struktur mit einem externen CAD-Programm (Rhinoceros, AutoCAD, Pro/Engineer,...) zu erstellen und das Modell dann in das FE-Programm einzulesen. Im Optimierungsprozess soll an hochbeanspruchten Bauteilen eine Volumenzunahme und an schwach beanspruchten Bauteilen eine Volumenabnahme vorgenommen werden. Die Konsequenz aus dieser Volumenverteilung wäre eine homogene Beanspruchungsverteilung und damit Strukturen mit maximaler Festigkeit bei minimalem Volumen. In einem ersten Schritt wird der Optimierungsraum festgelegt, welcher das zu optimierende Volumen begrenzt. Dieser Raum wird im Allgemeinen durch die Grenzen der Struktur festgelegt. An dieser Stelle sind nun schon jene Teile der Struktur festzulegen, welche unabhängig von der Belastung nicht verändert werden dürfen. Diese Bauteile ergeben sich aus Sicherheits-, Verwendungs-, oder fertigungstechnischen Gründen und werden in der nachfolgenden Strukturoptimierung nicht berücksichtigt. Im nächsten Schritt werden wie bei einer normalen statischen oder dynamischen Analyse die Randbedingungen festgelegt. Alle Festhaltungen und einwirkenden Kräfte werden an der Struktur angebracht. Daraufhin erfolgt die FE-Analyse. Als Ergebnis dieser Rechnung erhält man für jedes Element eine Beanspruchung. Diese Beanspruchung kann die Hypothese nach von Mises, die allgemein gemittelte Schubspannungshypothese oder aber auch die logarithmische Dehnungshypathesc sein. Nun muss festgelegt werden, wie viel Volumen des Körpers umgelagert werden darf. Dafür legt man einen Grenzwert der Beanspruchung fest, ab welchem die Elemente gelöscht werden, bzw. der Struktur erhalten bleiben. Im Allgemeinen ist dieser Grenzwert in den Optimierungsprogrammen nicht mehr festzulegen, es ist nur notwendig zu bestimmen, wie viele Prozente des Volumens gelöscht werden sollen. Daraufhin werden die weniger stark belasteten Elemente entfernt und die neu erhaltene Struktur wird wieder in Schritt 2 eingelesen. Diese Iteration erfolgt so lange, bis man ein annehmbares Ergebnis erhält, bzw. das Bauteil an einer Stelle unter der Belastung versagt. Die aus der Optimierung erhaltene Grobstruktur muss noch durch eine Remodellierung geglättet werden und dem Entwicklungsingenieur liegt somit ein erstes optimiertes Modell vor.

Bei Verwendung von verschiedenen Optimierungsverfahren ergeben sich jedoch auch verschiedene Ergebnisse. Die Ergebnisse variieren dabei, je nach Problemstellung und angewandtem Verfahren, von unbrauchbar bis gut. Während man bei einer parameterorientierten Optimierung nur eine Variation der Parameter durchführt und somit bei komplexen Problemstellungen keine neuen Inputs und Ideen bekommt, stellt es sich bei einer parameterfreien Optimierung oft als schwierig heraus, jene Bereiche zu definieren, welche in ihrer ursprünglichen Form belassen werden sollen. Auch ist es aufwändig bis unmöglich, Optimierungsparameter vorzugeben, sodass eine Struktur nur in eine Richtung optimiert wird (die Länge der Struktur soll unverändert bleiben, während sich nur die Breite ändern soll).

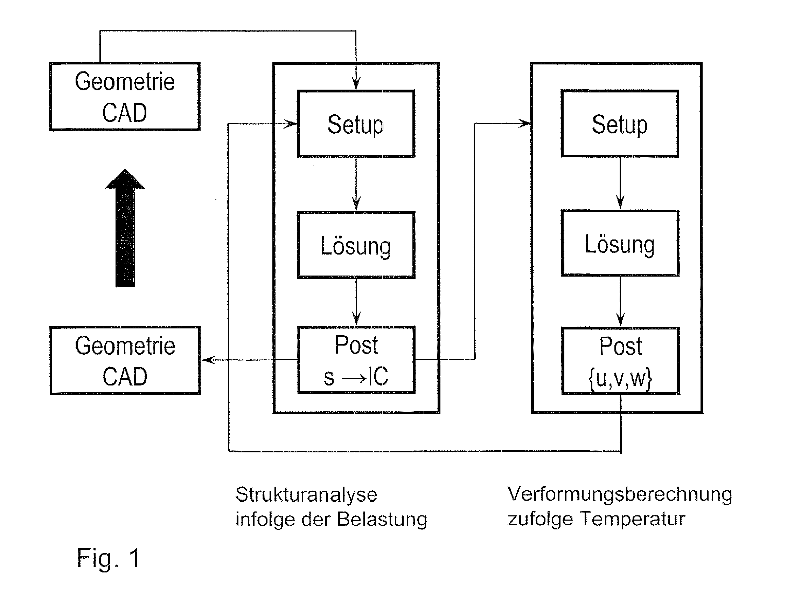

Ein weiteres Verfahren zur Formoptimierung greift auf Temperaturdifferenzen zurück, um diese Probleme der anderen Optimierungsverfahren zu beseitigen. Dieses Verfahren ist in Fig. 1 veranschaulicht. Die Vorgangsweise sieht mehrere Iterationen vor, wobei als erster Schritt eine statische Analyse durchgeführt wird, in welcher die Vergleichsspannungen (Hypothese nach von Mises) für jedes Element ermittelt werden. Dafür muss die Struktur entweder direkt im finiten Elemente Programm (z. B. ANSYS) erstellt oder als Datei eingelesen werden. Für das Einlesen wird das Modell vorher mit einem CAD-Programm erzeugt und vernetzt. Es ist von Vorteil, wenn man keine Geometrie, sondern ausschließlich die Elemente einliest. Trotzdem ist es möglich, auch eine Geometrie einzulesen und die Vernetzung dann erst im finiten Elemente Programm (z. B. ANSYS Classic, ABAQUS, etc.) durchzuführen. Die auf das Modell wirkenden Festhaltungen und Kräfte werden den Angaben des Entwicklungsingenieurs entsprechend aufgebracht. Die aus der Analyse pro Element resultierende Spannung ist ein über die Knoten gemittelter Wert. Durch diese Mittelung können auch Singularitäten (resultierend aus Belastung und/oder Geometrie) beseitigt werden. Die erhaltenen Spannungen werden abgespeichert und eine 2. Analyse durchgeführt. Bei dieser 2. Analyse wird die unverformte Struktur mit einem Temperaturlastfall belastet. Die Festhaltungen dieses Lastfalls sind jene Bereiche der Struktur, welche aus fertigungs- oder verwendungstechnischen Gründen nicht verändert werden dürfen. Für den Temperaturlastfall ist es notwendig, eine Referenztemperatur vorzugeben, welche z.B. die Größe der halben maximalen Vergleichsspannung haben kann. Der Temperaturlastfall wird anschließend aufgebracht, wobei jedes Element mit einer Temperatur der Größe der zuvor berechneten Vergleichsspannung belastet wird. Das bedeutet, dass Elemente mit sehr kleiner Vergleichsspannung mit einer Temperatur belastet werden, welche kleiner als die Referenztemperatur (halbe maximale Vergleichsspannung) ist und sie sich in der Folge zusammenziehen. Elemente mit großen Spannungswerten bauen hingegen Masse auf. Die erhaltene verformte Struktur wird abgespeichert und wieder als neue Ausgangsstruktur in der statischen Analyse verwendet. Diese Iteration wird so lange fortgesetzt, bis ein zufriedenstellendes Ergebnis erzielt wird.

Der Erfindung liegt die Aufgabe zu Grunde, ein verbessertes Verfahren zur parameterfreien Formoptimierung von Bauteilen zur Verfügung zu stellen. Diese Aufgabe wird mit den Patentansprüchen gelöst.

Die Erfindung geht von dem Grundgedanken aus, nach einer Mechanischen Analyse bzw. Berechnung eine thermische Berechnung durchzuführen die dann wieder von einer mechanishen Berechnung gefolgt wird. Bei der mechanischen Berechnung werden zunächst die mechanischen Spannungen mit den Festhalterungen des zu untersuchenden Bauteils berechnet. Im nächsten Schritt, der thermischen Analyse, werden die Spannungswerte als Temperaturwerte interpretiert und eine transiente thermische Analyse zum Abbau von Spannungsspitzen durchgeführt. In diesem Schritt wird noch keine modifizierte Bauteilgeometrie berechnet. In der anschließenden mechanische Berechnung wird die Temperaturverteilung der transienten Temperaturfeldberechnung auf das ursprünglich mechanische Modell aufgebracht, wobei an diesem Modell die Randbedingungen der nicht geänderten Geometriebereiche gewählt werden können. Diese neuerliche mechanische Berechnung (Verformungen zufolge einer Temperaturbelastung) liefert dann die optimierte Geometrie.

Das erfindungsgemäße computergestützte Verfahren weist gemäß einer bevorzugten Ausführungsform die Schritte auf:
a) Erstellen eines 2- oder 3-dimensionalen digitalen Modells eines mechanischen Bauteils mit einem CAD-System;
b) Durchführen einer Vorverarbeitung der digitalen Modelldaten mit einem Finite-Elemente-System;
c) Durchführen einer statischen Strukturanalyse auf der Grundlage des vorverarbeiteten digitalen Modells zum Ermitteln der auf jedes Element der Modellstruktur wirkenden Beanspruchung;
d) Durchführen einer transienten Temperaturfeldberechnung auf der Grundlage der ermittelten Beanspruchung des Modells, wodurch eine modifizierte, geglättete Temperaturverteilung erhalten wird;
e) Aufbringen eines Temperaturlastfalls auf das mechanische Modell und Durchführen einer Verformungsberechnung, wodurch eine modifizierte Modellstruktur erhalten wird; und
f) Ausgeben der in Schritt e) erhaltenen, durch Temperaturbelastung verformte Modellstruktur.

Gemäß einer bevorzugten Ausführungsform weist Schritt d) auf: d1) Übertragen der in Schritt c) erhaltenen Beanspruchungen in ein Temperaturfeld; d2) Durchführen eine transienten dynamischen Berechnung mit dem in Schritt d1) erhaltenen Ausgangstemperaturfeld, um lokale Beanspruchungsspitzen auszugleichen; und d3) Berechnen einer modifizierten Modellstruktur mit dem in Schritt d2) erhaltenen Temperaturfeld.

Gemäß einer weiter bevorzugten Ausführungsform weist Schritt b) die Schritte auf Vernetzen des Modells; Zuweisen von Materialeigenschaften; Aufbringen von Randbedingungen für statische Belastung, insbesondere Lasten und/oder Festhaltungen; Aufbringen von Randbedingungen für den Temperaturlastfall.

Die Schritte c) bis f) werden iterativ durchlaufen, bis ein Abbruchrkriterium erreicht ist. Das Abbruchkriterium kann nach mehreren Zielvorgaben definiert werden. Diese Zielvorgaben können z. B. das Erreichen einer vorgegeben Volumenreduktion, die Unterschreitung eines maximalen Spannungswertes oder die Überschreitung einer gewählten Maximalanzahl von Iterationsschleifen sein.

Bei einer bevorzugten Ausführungsform wird in Schritt e) eine Referenztemperatur vorgegeben ist, wobei jedes Element des Modells mit einer Temperatur der Größe der in Schritt c) berechneten Belastungsspannung belastet wird und wobei Elemente mit kleinen Spannungswerten mit einer Temperatur belastet werden, die kleiner als die Referenzspannung ist und Elemente mit großen Spannungswerten mit einer Temperatur belastet werden, die größer als die Referenzspannung ist.

Die Knoten des vorverarbeiteten digitalen Modells, die in Schritt d) belastet werden, werden vorzugsweise zu Komponenten zusammengefasst. Außerdem werden die als Auflager definierten Knoten mit den Randbedingungen belastet.

Vorzugsweise werden die Randbedingungen des Temperaturlastfalls auf die Knoten des vorverarbeiteten digitalen Modells aufgebracht, die nicht verändert werden sollen.

Abschließend wird in Schritt f) ein Bild mit den entsprechenden Spannungen ausgegeben.

Bei der erfindungsgemäßen iterativen Methode wird eine Struktur auf Grund der Ergebnisse einer statischen, modalen oder transienten Analyse und anschließendem Temperaturlastfall schrittweise optimiert. Dabei kann der Anwender wählen, ob die Struktur hinsichtlich Bauteilmasse optimiert werden soll oder eher hohe Spannungskonzentrationen abgebaut werden sollen. Erfindungsgemäß wird über eine zusätzliche transiente Temperaturfeldberechnung Spannungskonzentrationen auf ein Nahfeld um die Spannungskonzentration derart Übertragen, dass hohe Spannungsgradienten ausgeglichen werden und damit Formen optimiert werden können, die mit klassischen Methoden einer Optimierung schwer zugänglich sind.

Ein weiterer Vorteil des entwickelten Verfahrens liegt in der Möglichkeit beliebige Bereiche in einfachster Weise zu definieren, an denen die Geometrie nicht modifiziert werden darf.

Die Erfindung wird nachfolgend unter Bezugnahme auf die Figuren näher erläutert. Es zeigen:
- Fig. 1: ein Ablaufdiagramm eines herkömmlichen Verfahrens;
- Fig. 2: ein Ablaufdiagramm des erfindungsgemäßen Verfahrens;
- Fig.3 3: ein Anwendungsbeispiel in Form eines Bedienhebels zur Veranschaulichung des erfindungsgemäßen Verfahrens;
- Fig. 4: den Spannungsverlauf im Beispiel gemäß Fig. 3 unter den in Fig. 3 dargestellten Lastfällen;

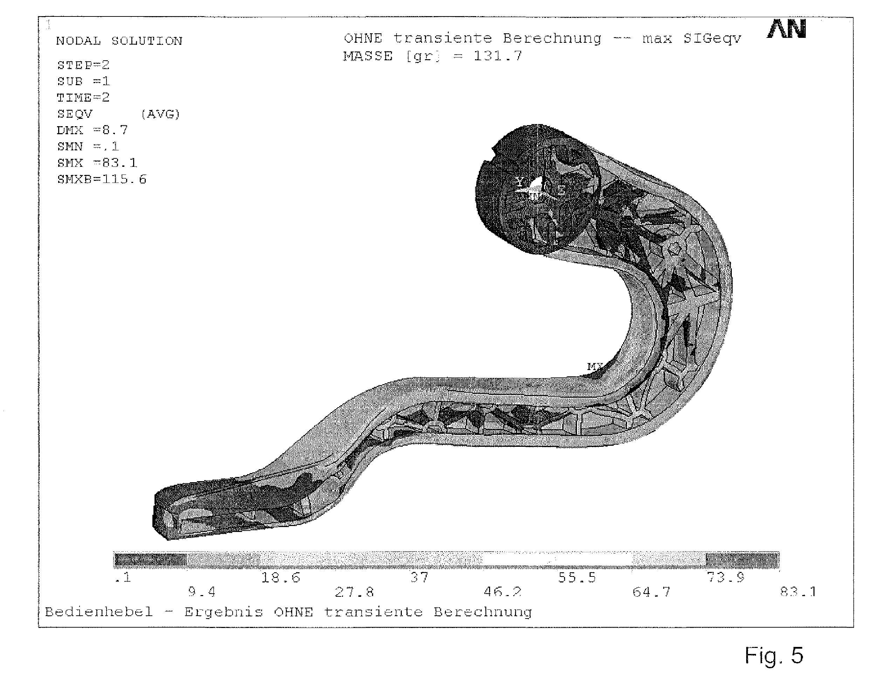

- Fig. 5: eine optimierte Geometrie unter Verwendung des herkömmlichen Verfahrens gemäß Fig. 1; und
- Fig. 6: die optimierte Geometrie unter Verwendung des erfindungsgemäßen Verfahrens gemäß Fig. 2.

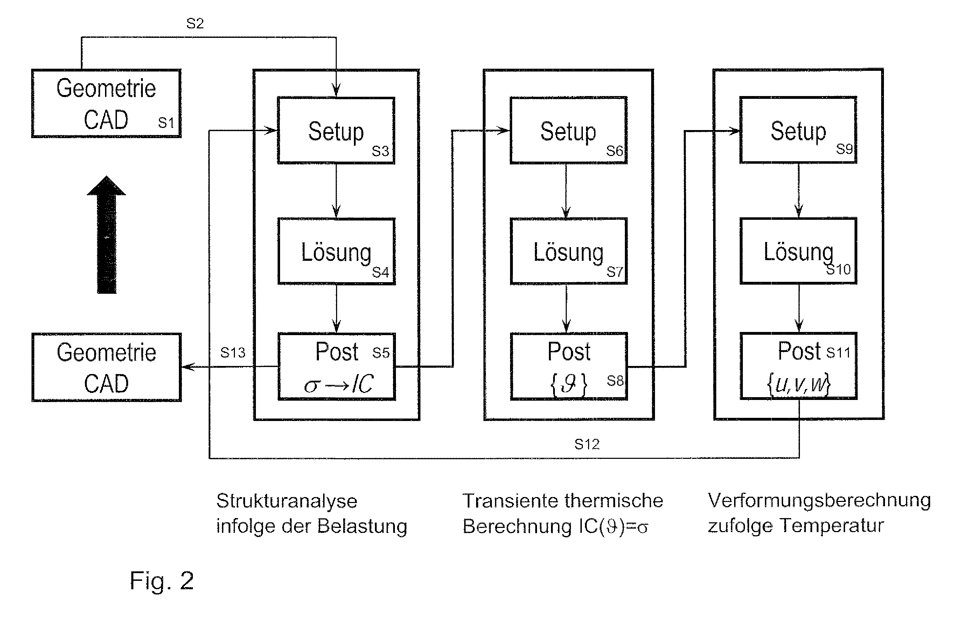

Fig. 2 zeigt ein Ablaufschema des erfindungsgemäßen Verfahrens.

Bei dem erfindungsgemäßen Verfahren wird zunächst eine statische Analyse durchgerührt. Dabei werden wiederum die Vergleichsspannungen (nach der Hypothese nach von Mises) für jedes Element der Struktur ermittelt. Hierfür können zwei Unterschiedliche Methoden gewählt werden. Entweder wird die Struktur direkt beispielsweise in ANSYS erstellt (Schritt S1 in Fig. 2) oder als Datei eingelesen (Schritt S2 in Fig. 2). Für die zweite Alternative wird das Modell vorher mit einem CAD-Programm erzeugt und vernetzt. Es ist hierbei vorteilhaft, wenn keine Geometrie, sondern ausschließlich die Elemente eingelesen werden. Die auf das Modell wirkenden Festhaltungen und Kräfte werden dann in Schritt S3 den Vorgaben entsprechend aufgebracht.

Im Anschluss daran erfolgt in Schritt S4 die Analyse des so vorbereiteten Modells. Die aus der Analyse pro Element resultierende Spannung ist ein über die Knoten des Netzes gemittelter Wert. Die aus der Bauteilbelastung resultierenden Spannungen werden in Schritt S5 nachbearbeitet (post-processing) und abgespeichert.

In Schritt 6 werden die Zahlenwerte der berechneten Spannungen als Temperaturen interpretiert und als thermische Startbelastung (inital conditions IC) für eine transiente Temperaturfeldberechnung verwendet (Schritt S7). Die Abbildung der Bauteilgeometrie für diese Temperaturfeldberechnung erfolgt durch unveränderte Übernahme des Elementnetzes aus der mechanischen Analyse. Für die thermische Analyse werden lediglich die Elementtypen auf geometrisch korrespondierende thermische Elemente geändert.

Mit dieser zweiten Analysestufe werden dadurch Temperaturspitzen, welche im mechanischen Modell Spannungskonzentrationen entsprechen, auf ein Nahfeld um die Spannungskonzentrationen derart übertragen, dass hohe Temperaturgradienten ausgeglichen werden.

Dies ist von Vorteil, da dadurch Formen optimiert werden können, die mit klassischen Methoden einer Optimierung schwer zugänglich sind.

Ohne diese transiente Temperaturfeldberechnung wird bei vielen Bauteilformen nämlich nur sehr lokal zusätzliches Volumen aufgebaut, was in manchen Fällen sogar zu einer Erhöhung der Spannungen aufgrund entstehender geometrischer Kerben führen kann.

Das Ergebnis der in Schritt 7 berechneten und in Schritt 8 ausgewerteten Temperaturverteilung wird einer weiteren mechanischen Analyse beginnend in Schritt S9 zugeführt. Dabei wird die Struktur mit dem Temperaturlastfall belastet. Die Festhaltungen dieses Lastfalls sind jene Bereiche der Struktur, welche aus fertigungs- oder verwendungstechnischen Gründen nicht verändert werden dürfen. Für den Temperaturlastfall wird eine Referenztemperatur vorgegeben. Diese kann beispielsweise die Größe der halben maximalen Vergleichsspannung haben. Der Temperaturlastfall wird anschließend aufgebracht (Schritt S10), wobei jedes Element mit einer Temperatur der Größe der zuvor berechneten Vergleichsspannung belastet wird. Das bedeutet, dass Elemente mit sehr kleiner Vergleichsspannung mit einer Temperatur belastet werden, welche kleiner als die Referenztemperatur (halbe maximale Vergleichsspannung) ist und sie sich in der Folge zusammenziehen. Elemente mit großen Spannungswerten bauen hingegen Masse auf.

Die erhaltene verformte Struktur wird wiederum abgespeichert (Schritt S1 1) und wieder als neue Ausgangsstruktur in der statischen Analyse verwendet (Schritt S12). Diese Iteration wird so lange fortgesetzt, bis ein zufriedenstellendes Ergebnis erzielt wird und diese in Schritt S13 wieder in das CAD-Programm übergeben wird.

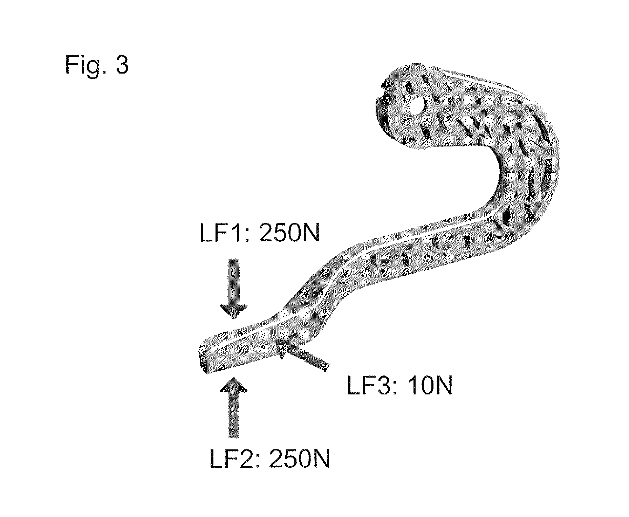

Zur Veranschaulichung der mit dem erfindungsgemäßen Verfahrens gemäß Fig. 2 verbundenen Vorteile und technischen Effekte wir im Folgenden als Beispiel ein Bedienhebel aus Kunststoff wie in Fig. 3 gezeigt betrachtet. Beispielsweise ist dies der Bedienhebel einer mechanisch verstellbaren Lenksäule. Dazu wird die Spannungsreduktion im Hebel bei drei verschiedenen Lastfällen betrachtet: senkrechte Belastungen von 250 N auf das Hebelende oder eine seitliche Belastung von 10 N.

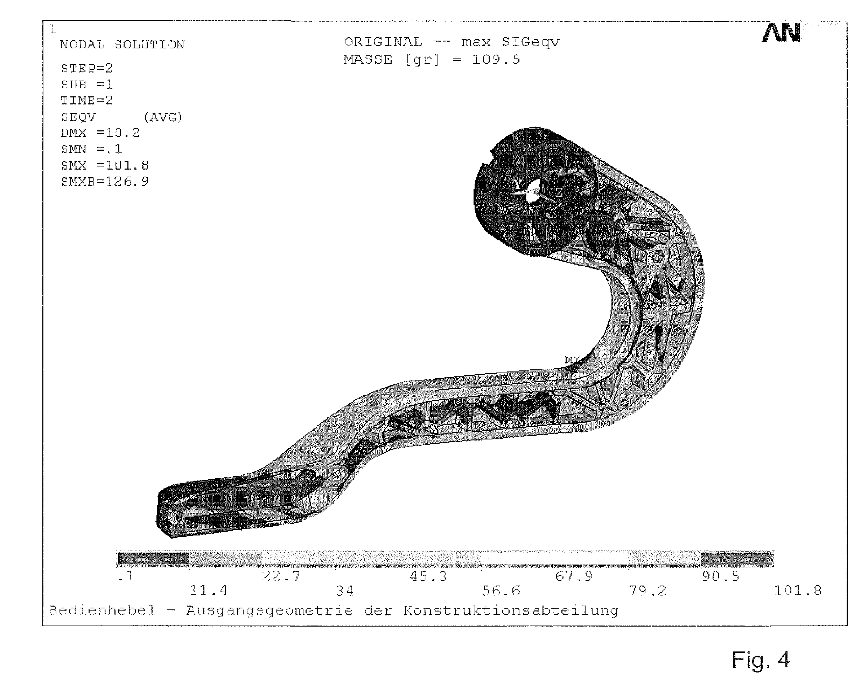

Eine Analyse der Ausgangsgeometrie dieses Beispiels mit einer Masse von 109,5g wie in Fig. 4 gezeigt liefert bei Berücksichtigung aller drei Lastfälle als maximale Spannung σ_{eqv} = 101,8 N/mm². Die Optimierung erfolgte in der ANSYS Workbench.

Wird nun auf diese Ausgangsgeometrie das Verfahren gemäß Fig. 1 angewendet, so ergibt sich für die optimierte Geometrie eine Masse von 131,7 g und eine maximale Spannung σ_{eqv} = 83,1 N/mm². Gegenüber der Ausgangsgeometrie bedeutet dies eine Spannungsreduktion von 83,1 N/mm² auf 101,8 N/mm². Dies entspricht einer Reduktion auf 82%. Allerdings geht damit eine Massenerhöhung von 109,5 g auf 131,7 g einher. Dies entspricht einer Erhöhung auf 120%.

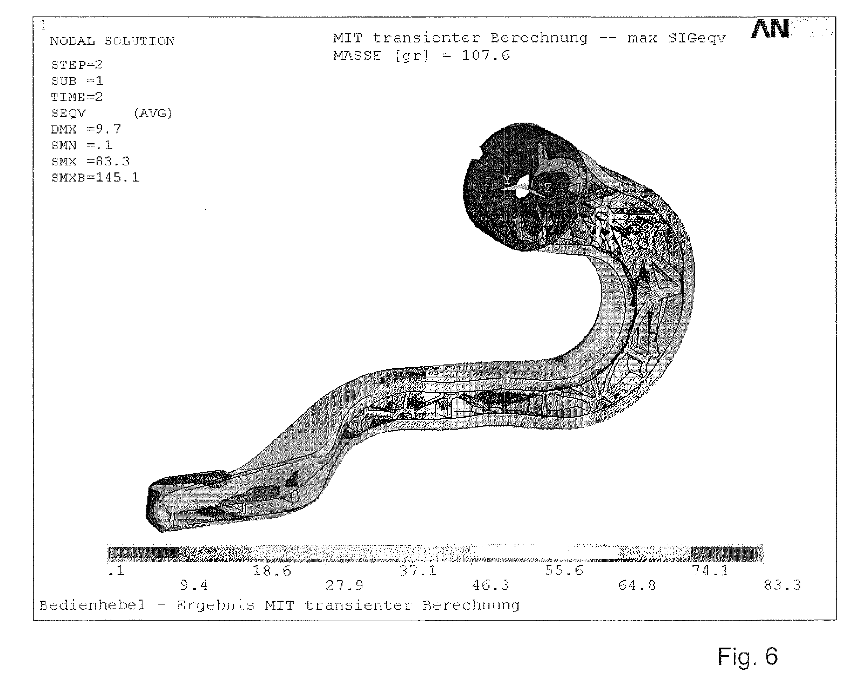

Fig. 6 zeigt das Ergebnis der Anwendung des erfindungsgemäßen Verfahrens auf das Ausgangsbeispiel von Fig. 3. Die optimierte Geometrie hat eine Masse von 107,6 g und eine maximale Spannung σ_{eqv} = 83,3 N/mm². Dies bedeutet eine gleiche Spannungsreduktion von 101,8 N/mm² auf 83,3 N/mm² also auf 82%. Allerdings geht dies nicht mit einer nachteiligen Masseerhöhung einher. Sie verringert sich sogar auf 98 %, von 109,5 g auf 107,6 g.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungssformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

## Patentansprüche

1. Verfahren mit den Schritten:
g) Erstellen eines 2- oder 3-dimensionalen digitalen Modells eines mechanischen Bauteils mit einem CAD-System;
h) Durchführen einer Vorverarbeitung der digitalen Modelldaten mit einem Finite-Elemente-System;
i) Durchführen einer statischen Strukturanalyse auf der Grundlage des vorverarbeiteten digitalen Modells zum Ermitteln der auf jedes Element der Modellstruktur wirkenden Beanspruchung;
j) Durchführen einer transienten Temperaturfeldberechnung auf der Grundlage der ermittelten Beanspruchung des Modells, wodurch eine modifizierte Temperaturverteilung mit geglätteten Temperaturgradienten erhalten wird;
k) Aufbringen eines Temperaturlastfalls auf das mechanische Modell und Durchführen einer Verformungsberechnung; und
l) Ausgeben der in Schritt e) erhaltenen, durch Temperaturbelastung verformten Modellstruktur.

2. Verfahren nach Anspruch 1, wobei Schritt d) aufweist:
d1) Übertragen der in Schritt c) erhaltenen Beanspruchungen in ein Temperaturfeld;
d2) Durchführen eine transienten dynamischen Berechnung mit dem in Schritt d1) erhaltenen Ausgangstemperaturfeld, um lokale Beanspruchungsspitzen auszugleichen; und
d3) Berechnen einer modifizierten Modellstruktur mit dem in Schritt d2) erhaltenen Temperaturfeld.

3. Verfahren nach einem der vorstehenden Ansprüche, wobei Schritt b) die Schritte aufweist:
- Vernetzen des Modells;
- Zuweisen von Materialeigenschaften;
- Aufbringen von Randbedingungen für statische Belastung, insbesondere Lasten und/oder Festhaltungen;
- Aufbringen von Randbedingungen für den Temperaturlastfall.

4. Verfahren nach einem der vorstehenden Ansprüche, wobei die Schritte c) bis f) iterativ durchlaufen werden.

5. Verfahren nach einem der vorstehenden Ansprüche, wobei in Schritt e) eine Referenztemperatur vorgegeben ist, wobei jedes Element des Modells mit einer Temperatur der Größe der in Schritt c) berechneten Belastungsspannung belastet wird und wobei Elemente mit kleinen Spannungswerten mit einer Temperatur belastet werden, die kleiner als die Referenzspannung ist und Elemente mit großen Spannungswerten mit einer Temperatur belastet werden, die größer als die Referenzspannung ist.

6. Verfahren nach einem der vorstehenden Ansprüche, wobei die Knoten des vorverarbeiteten digitalen Modells, die in Schritt d) belastet werden, zu Komponenten zusammengefasst werden.

7. Verfahren nach einem der vorstehenden Ansprüche, wobei die als Auflager definierten Knoten mit den Randbedingungen belastet werden.

8. Verfahren nach einem der vorstehenden Ansprüche, wobei die Randbedingungen des Temperaturlastfalls auf die Knoten des vorverarbeiteten digitalen Modells aufgebracht werden, die nicht verändert werden sollen.

9. Verfahren nach einem der vorstehenden Ansprüche, wobei in Schritt f) ein Bild mit den entsprechenden Spannungen ausgegeben wird.

## Geänderte Patentansprüche

### Geänderte Patentansprüche gemäss Regel 137(2) EPÜ.

**1.** Computergestütztes Verfahren zur parameterfreien Formoptimierung von mechanischen Bauteilen, mit den Schritten:
a) Erstellen eines 2- oder 3-dimensionalen digitalen Modells eines mechanischen Bauteils mit einem CAD-System;
b) Importieren der CAD-Daten in ein Finite-Elemente-System und Weiterverarbeitung der digitalen Modelldaten mit dem Finite-Elemente-System;
c) Durchführen einer statischen Strukturanalyse auf der Grundlage des mit dem Finite-Elemente-System verarbeiteten digitalen Modells zum Ermitteln der auf jedes Element der Modellstruktur wirkenden Beanspruchung;
d) Durchführen einer thermodynamischen Temperaturfeldberechnung auf der Grundlage der ermittelten Beanspruchung des Modells zum Abbau von Spannungsspitzen im mechanischen Bauteil, wodurch eine modifizierte Temperaturverteilung mit geglätteten Temperaturgradienten erhalten wird;
e) Aufbringen eines Temperaturlastfalls auf das mechanische Modell und Durchführen einer Verformungsberechnung; und
f) Ausgeben der in Schritt e) erhaltenen, durch Temperaturbelastung verformten Modellstruktur des mechanischen Bauteils.

**2.** Verfahren nach Anspruch 1, wobei Schritt d) aufweist:
d1) Übertragen des in Schritt c) erhaltenen Spannungsfeldes in ein Temperaturfeld durch Interpretation der Zahlenwerte der ermittelten mechanischen Beanspruchungen als Temperaturfeld;
d2) Durchführen eine thermodynamischen Berechnung mit dem in Schritt d1) erhaltenen Ausgangstemperaturfeld, um lokale Beanspruchungsspitzen auszugleichen; und
d3) Berechnen einer modifizierten Modellstruktur unter Verwendung des in Schritt d2) erhaltenen Temperaturfeldes als Belastung.

**3.** Verfahren nach einem der vorstehenden Ansprüche, wobei Schritt b) die Schritte aufweist:
- Vernetzen des Modells;
- Zuweisen von Materialeigenschaften;
- Aufbringen von Randbedingungen für statische Belastung, insbesondere Lasten und/oder Festhaltungen;
- Aufbringen von Randbedingungen für den Temperaturlastfall.

**4.** Verfahren nach einem der vorstehenden Ansprüche, wobei die Schritte c) bis f) iterativ durchlaufen werden.

**5.** Verfahren nach einem der vorstehenden Ansprüche, wobei in Schritt e) eine Referenztemperatur vorgegeben ist, wobei jedes Element des Modells mit einer Temperatur der Größe der in Schritt c) berechneten Belastungsspannung belastet wird und wobei Elemente mit kleinen Spannungswerten mit einer Temperatur belastet werden, die kleiner als die Referenzspannung ist und Elemente mit großen Spannungswerten mit einer Temperatur belastet werden, die größer als die Referenzspannung ist.

**6.** Verfahren nach einem der vorstehenden Ansprüche, wobei die Knoten des vorverarbeiteten digitalen Modells, die in Schritt d) belastet werden, zu Komponenten zusammengefasst werden.

**7.** Verfahren nach einem der vorstehenden Ansprüche, wobei die als Auflager definierten Knoten mit den Randbedingungen belastet werden.

**8.** Verfahren nach einem der vorstehenden Ansprüche, wobei die Randbedingungen des Temperaturlastfalls auf die Knoten des vorverarbeiteten digitalen Modells aufgebracht werden, die nicht verändert werden sollen.

**9.** Verfahren nach einem der vorstehenden Ansprüche, wobei in Schritt f) ein Bild mit den entsprechenden Spannungen ausgegeben wird.
